# FASCICULE DE BREVET EUROPEEN

(11) **EP 2 219 950 B1**
(45) Date de publication et mention de la délivrance du brevet: **12.09.2018**
(21) Numéro de dépôt: 08863721.0
(22) Date de dépôt: 10.12.2008
(51) Int. Cl.: B64D 45/02, H02G 13/00

(54) **SYSTÈME PARAFOUDRE ET AÉRONEF COMPORTANT UN TEL SYSTÈME**
BLITZSCHUTZSYSTEM UND FLUGZEUG MIT DERARTIGEM SYSTEM
ANTI-LIGHTNING SYSTEM AND AIRCRAFT COMPRISING SUCH A SYSTEM

(30) Priorité: 11.12.2007 FR 0759727
(43) Date de publication de la demande: 25.08.2010
(73) Titulaire: AIRBUS OPERATIONS (S.A.S), 31060 Toulouse (FR)
(72) Inventeur: GATTUS, Olivier, F-31590 Gaure (FR); LAMBERT, Charles, F-31300 Toulouse (FR); FOURNIE, Jacques, F-31330 Grenade (FR); LOCHE, Jean-Christophe, F-31150 Gratentour (FR); GIRAUDINEAU, Mathieu, F-44200 Nantes (FR); DESTOMBES, Gautier, F-44340 Bouguenais (FR); MERCADIER, Gilles, F-81370 Saint Sulpice Sur Tarn (FR); LIEVEN, Patrick, F-31620 Fronton (FR); BINAUD, Damien, F-81800 Couffouleux (FR)
(74) Mandataire: Gicquel, Olivier Yves Gérard
(86) Numéro de dépôt international: PCT/FR2008/052269
(87) Numéro de publication internationale: WO 2009/080991

(56) Documents cités:
- EP-A- 0 685 389
- EP-A- 0 790 182
- EP-A- 1 484 245
- WO-A-99/51494
- DE-A1- 10 200 564
- US-A1- 2005 213 278

## Description

L'invention concerne un radôme comprenant un système parafoudre pour protéger une structure composite.

Le document EP 0685389 décrit un système parafoudre incorporé à une structure composite ayant une surface externe susceptible d'être soumise à un écoulement d'air.

Les structures composites sont largement mises en oeuvre en raison de leurs grandes résistances mécaniques, tout en présentant une très faible masse. L'industrie aéronautique utilise donc largement ces structures pour équiper la paroi externe de l'aéronef telle que le radôme situé à l'avant de l'aéronef et le carénage d'aéronef. Toutefois, ces structures qui sont isolants électriquement ne permettent pas d'établir une évacuation des courants électriques lors des impacts de foudre sur la paroi externe, générant localement une zone de forte densité de charges qui peuvent d'une part endommager la paroi externe d'aéronef et d'autre part perturber les installations électriques contenues sous cette paroi externe. Le cas du radôme est encore plus critique puisque par définition, il ne peut pas intégrer les dispositifs classiques d'écoulement du courant foudre, tels qu'un grillage métallique inséré dans la surface de structure, lesquels sont interdits de par les exigences de transparence vis-à-vis des ondes radar.

Il est connu de munir la paroi externe d'aéronefs d'éléments conducteurs s'étendant le long de la paroi pour attacher la foudre et à permettre l'écoulement des courants dus aux impacts de foudre sur la paroi externe des aéronefs vers une masse d'aéronef qui est généralement le fuselage.

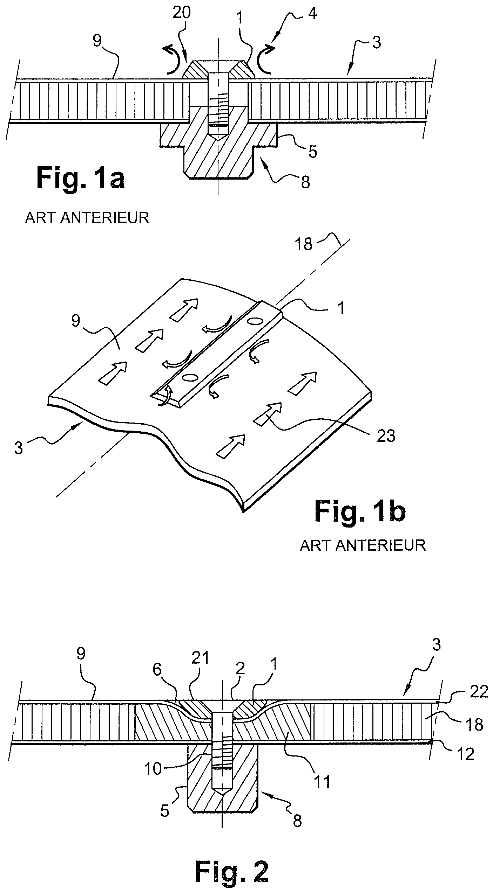

Les figures 1A et 1B montrent un tel élément conducteur présentant sous la forme d'une bande électriquement conductrice 1 typiquement en aluminium ou en cuivre disposée à la surface externe 9 du radôme 3 d'un avion. Le radôme a pour fonction principale de protéger un radar, de ce fait réalisé dans un matériau composite électriquement isolant perméable aux ondes électromagnétiques. La bande est fixée au radôme par des moyens de fixations 8 tels qu'une vis. Chaque bande parafoudre 1 est électriquement reliée à la surface externe 9 du radôme 3 pour permettre l'écoulement des charges électrostatiques qui s'y accumulent. La pièce 5 dans laquelle la vis vient se loger pour fixer la bande 1 est en plastique isolant.

Cette bande est reliée électriquement à la jonction du fuselage de l'avion pour assurer sa mise individuelle à la masse. Ainsi la bande conductrice permet d'attacher la foudre et d'établir l'écoulement des courants dus aux impacts de foudre sur la paroi externe du radôme vers la masse sans affecter aucun autre élément du radôme.

Un tel dispositif parafoudre donne généralement satisfaction pour des parois externes n'ayant pas d'exigences en termes d'aérodynamique. Toutefois, il a été observé que le désaffleurement entre la surface externe 9 du radôme 3 et la bande conductrice 1 qui forme une marche sont sources de discontinuité dans l'écoulement d'air 23 sur la surface externe de l'aéronef, et par conséquent de turbulences 4 qui entraînent une diminution des performances aérodynamiques de l'aéronef (Fig. 1 b).

Or, le radôme de forme généralement conique situé en pointe avant d'aéronef constitue une contribution principale à l'aérodynamique de l'avion, il est donc essentiel d'éviter ces perturbations afin de ne pas pénaliser les performances aérodynamiques de l'aéronef.

Ces perturbations aérodynamiques ont en effet pour conséquence de générer une traînée, augmentée par le déclenchement de la transition laminaire/turbulent et par la même, une augmentation très sensible de la consommation en carburant de l'avion, ce qui est incompatible avec les exigences économiques des compagnies de transport aérien.

Il serait donc intéressant de disposer d'un système de protection du radôme d'un avion contre la foudre permettant de réduire la traînée pour réaliser un gain de masse en carburant important.

L'objectif de la présente invention est donc de proposer un système parafoudre pour une structure composite dont la surface externe est soumise à un écoulement d'air, simple dans sa conception et dans son mode opératoire, permettant de s'assurer d'une dissipation efficace de l'énergie d'un impact foudre sans endommagement de la structure et sans perturbation dans l'écoulement d'air.

A cet effet, l'invention concerne un radôme tel que défini dans la revendication 1.

Le système parafoudre selon l'invention permet d'assurer un parfait affleurement entre la surface externe de la bande conductrice et la surface externe de la structure composite, permettant ainsi de supprimer les turbulences et de conserver les performances aérodynamiques de l'aéronef.

On entend par "affleurement de la surface externe de la bande conductrice et de la surface externe de la structure" que la surface externe de la bande est au même niveau que la surface externe de la structure aux tolérances d'assemblage près. Notamment la surface externe de la bande peut ressortir jusqu'à 0,2 - 0,3 mm compte tenu des tolérances acceptables en matière aérodynamique.

En outre le système parafoudre de l'invention ne nécessite pas une modification de la structure de la connexion électrique de la bande à la masse par rapport à l'état de la technique en conservant la technologie bande extérieure.

Ce système peut avantageusement être mis en oeuvre sur tout type de structure composite, qu'elle soit monolithique, simple sandwich ou multisandwich. Les fixations utilisées pour le montage de la bande sur la structure comportent au moins un élément de fixation ayant une partie supérieure affleurante à la surface externe de la bande et une partie inférieure traversant la bande et l'épaisseur du logement, et au moins un élément de maintien serré sur une partie inférieure de l'élément de fixation débouchant sur la surface interne de la structure de manière à maintenir la bande dans le logement. De cette façon, l'affleurement entre la surface externe de la bande et la partie supérieure de l'élément de fixation permet également de réduire au maximum les risques de perturbations aérodynamiques.

On entend par "partie intégrante", une pièce composite dont la présence dans la structure composite ne pénalise pas les performances radioélectriques du radôme et permet de conserver les performances mécaniques équivalentes à un panneau classique utilisé pour les technologies bande extérieure.

La pièce composite qui est une empreinte de bande femelle est insérée entre les plis de la structure composite lors du drapage et co-cuite avec cette dernière. Sa mise en place est effectuée dans un moule équipé d'une empreinte de bande mâle après drapage de la première peau de la structure composite.

En outre cette pièce en matériau composite participe également à l'isolation électrique de la bande parafoudre vis-à-vis de l'antenne contenu à l'intérieur du radôme.

De préférence, chacune des bandes est connectée électriquement à des éléments de fixations réalisés dans un matériau électriquement conducteur situés à la base du radôme qui sont destinés à fixer le radôme au fuselage de l'aéronef. De cette façon, les courants dus aux impacts de foudre sont évacués par les bandes vers le fuselage directement.

L'invention sera mieux comprise à la lecture de la description qui suit et à l'examen des figures annexées dans lesquels:
La figure 1A montre une vue en coupe d'un radôme équipé d'un système parafoudre selon l'art antérieur et la figure 1B une vue de dessus de ce radôme et l'écoulement d'air sur cette surface externe ;
La figure 2 représente schématiquement en coupe d'un panneau équipé d'un système parafoudre selon un mode de réalisation particulier de l'invention, le système parafoudre comprenant une pièce composite en mousse, la pièce ayant un profil creux coopérant avec la forme de la bande conductrice parafoudre;
La figure 3 représente le système parafoudre selon le mode de réalisation particulier comprenant une pièce composite profilée en nid d'abeille à haute densité ;
La figure 4 représente le système parafoudre selon le mode de réalisation particulier comprenant une pièce en matériau composite monolithique dont le profil creux est obtenu par un drapage des plis à la forme de la bande par un empilement successifs de couches de fibres préimprégnés;
La figure 5 représente schématiquement le système parafoudre selon le mode de réalisation particulier de l'invention comprenant une pièce composite monolithique dont le profil creux est obtenu par un usinage d'une pièce monolithique pleine après la polymérisation ;
La figure 6 représente schématiquement le système parafoudre selon le mode de réalisation particulier de l'invention comprenant une pièce monolithique dont le profil creux est obtenu par un drapage au contour de la bande conductrice au moyen d'une empreinte mâle dans le moule ;
La figure 7 représente schématiquement le système parafoudre selon un autre mode particulier de l'invention ne munissant pas de pièce composite, le logement pour recevoir la bande conductrice étant formé par une rainure obtenue par un drapage au moyen d'une empreinte maie des plis du panneau.

La figure 2 montre un panneau 3 équipé d'un système parafoudre selon un premier mode de réalisation de l'invention. Le panneau comporte une structure composite sandwich comprenant une âme 18 et deux parois 22, 12 disposées respectivement de part et d'autre de l'âme sur les faces externes de l'âme.

Ces parois 22, 12 constituent les peaux externes du panneau composite, réalisés généralement à partir des fibres très résistantes tels que des fibres de verre, de quartz, d'aramide, ou de basalte. L'âme 18 peut être réalisée dans un matériau en mousse, en nid d'abeille ou en fils. Les peaux sont solidarisées à l'âme par polymérisation d'une résine.

Le radôme d'un avion est équipé généralement d'un tel panneau à structure composite sandwich électriquement isolant perméable aux ondes électromagnétiques. La paroi supérieure 22 du panneau constituant la paroi externe du radôme est soumis à un écoulement d'air lors du vol.

Le panneau est équipé d'un système parafoudre comprenant une bande électriquement conductrice 1 fixée au panneau au moyen des fixations 8. Généralement cette bande s'étendant le long de la paroi externe du panneau selon un axe longitudinale 18 d'une extrémité du panneau à une autre extrémité (fig.1B). Pour une surface importante, le panneau peut également être pourvu d'une pluralité de bandes disposées à intervalles réguliers dont le nombre et le dimensionnement de la bande sont alors avantageusement prévus pour permettre l'écoulement des courants dus aux impacts de foudre vers la masse. La section de ces bandes électriquement conductrices 1 est conditionnée par deux critères, à savoir le choix du matériau utilisé et l'impact de la présence de ces bandes sur les performances radioélectriques. A titre purement illustratif, le minimum exigé à l'état de l'art permettant une évacuation efficace du courant de foudre dans la bande est de 20 mm2 pour des bandes en cuivre et de 30 mm2 pour des bandes en aluminium.

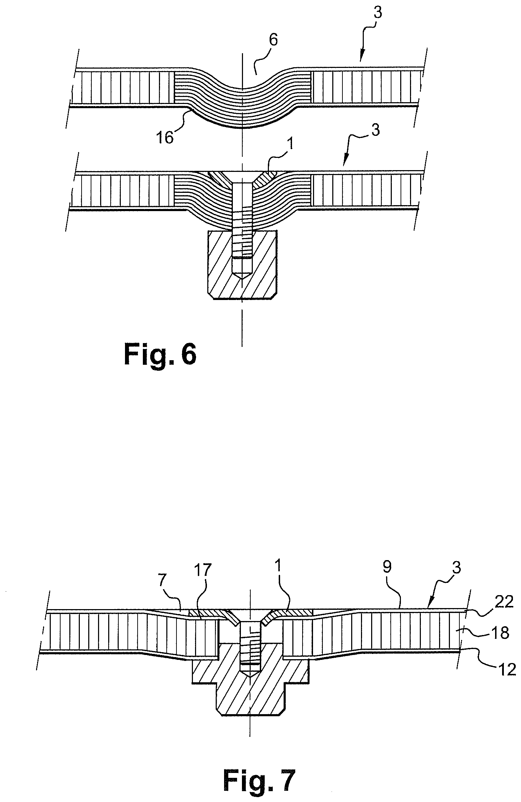

La bande parafoudre illustrée sur les figures 2 à 6 présente une section sensiblement semi-circulaire, la partie circulaire étant en contact avec le fond du logement. La figure 7 présente une autre forme de la bande parafoudre ayant une section rectangulaire de très faible épaisseur. La bande peut avoir diverses formes de géométrie, de section rectangulaire, trapézoïdale, triangulaire ou autre.

La bande conductrice est placée dans un logement 6 aménagé à la surface externe 9 du panneau destinée à être exposée à l'écoulement d'air, la forme de la bande étant destinée à coopérer avec la forme du logement de sorte que la surface externe de la bande 21 est affleurante à la surface externe du panneau 9. Ainsi l'ensemble réalise une continuité aérodynamique permettant de supprimer les perturbations aérodynamiques.

Cette bande parafoudre 1 constitue à la fois un récepteur des foudres et un conducteur des courants vers la masse.

La figure 2 illustre un mode de réalisation particulier du montage de la bande qui est fixée dans le logement par des fixations comprenant chacune un élément de fixation ayant une partie inférieure 10 traversant la bande 1 et l'épaisseur du panneau 3 et un élément de maintien 5 serré sur une partie inférieure 10 de l'élément de fixation débouchant sur la surface interne 12 panneau 3.

Avantageusement, la fixation est effectuée de sorte qu'une partie supérieure 2 de cet élément de fixation est affleurante à la surface externe 9 de la bande afin de ne pas créer de discontinuité pour éviter de générer de turbulences. L'élément de fixation est généralement une tige métallique 10 munie sur au moins une portion de sa surface externe un filetage externe qui traverse en partie un trou de perçage de la bande conductrice 1 et un évidement débouchant réalisé dans l'épaisseur du panneau 3.

Afin d'éviter toute perturbation provenant de la bande sur l'antenne radar, l'élément de maintien 5, l'écrou à chapeau qui vient couvrir entièrement la partie inférieure débouchant de la tige est fabriqué de préférence dans un matériau isolant tel qu'une résine Delrin® ou équivalent de manière à constituer un écrantage au champ électrique crée par la circulation des courants dans la bande afin de ne pas avoir d'attachement d'arc électrique sur l'antenne.

Les éléments de fixations sont placés de préférence le long de la bande selon l'axe 18 qui s'étendent d'une extrémité du panneau vers l'extrémité opposée.

Chacune des bandes est connectée électriquement et individuellement à des éléments de fixations réalisés dans un matériau électriquement conducteur situés à la base du radôme qui sont destinés à fixer le radôme au fuselage de l'aéronef.

Pour former le logement, la figure 2 montre également que le système parafoudre comprend une pièce 11 réalisée dans un matériau composite isolant ayant un profil creux destiné à coopérer avec la forme de la bande électriquement conductrice. Cette pièce composite profilée est insérée dans l'épaisseur du panneau 3 et faisant partie intégrante de la structure composite du panneau. Cette pièce qui est une empreinte de bande femelle est insérée entre les plis de la structure composite lors du drapage et co-cuite avec cette dernière. Sa mise en place est effectuée dans un moule équipé d'une empreinte de bande mâle après drapage de la première peau 12 de la structure composite. De cette façon, sa présence ne modifie pas la structure composite, et influence le moins possible les performances radioélectriques du radôme. En outre cette pièce en matériau composite permet d'assurer également l'isolation électrique de la bande parafoudre vis-à-vis de l'antenne contenu à l'intérieur du radôme. Elle permet également de conserver les performances mécaniques équivalentes à une paroi classique à structure composite sandwich.

Un autre avantage est de pouvoir proposer une pièce qui permet de réaliser un interfaçage entre les fixations et la structure sandwich, permettant de répartir ainsi les efforts de liaison qui sont locaux sur un plus grand volume de la structure composite sandwich.

Les figures 2 à 6 présentent les différents modes de réalisation de cette pièce composite profilée.

Sur la figure 2, la pièce profilée est une bande 11 de mousse à haute densité semi-rigide expansée, extrudée ou estampée à la forme de la bande conductrice. Cette bande est insérée dans l'épaisseur du panneau, plus exactement entre la peau externe 9 et la peau interne 12 du panneau lors du drapage du panneau.

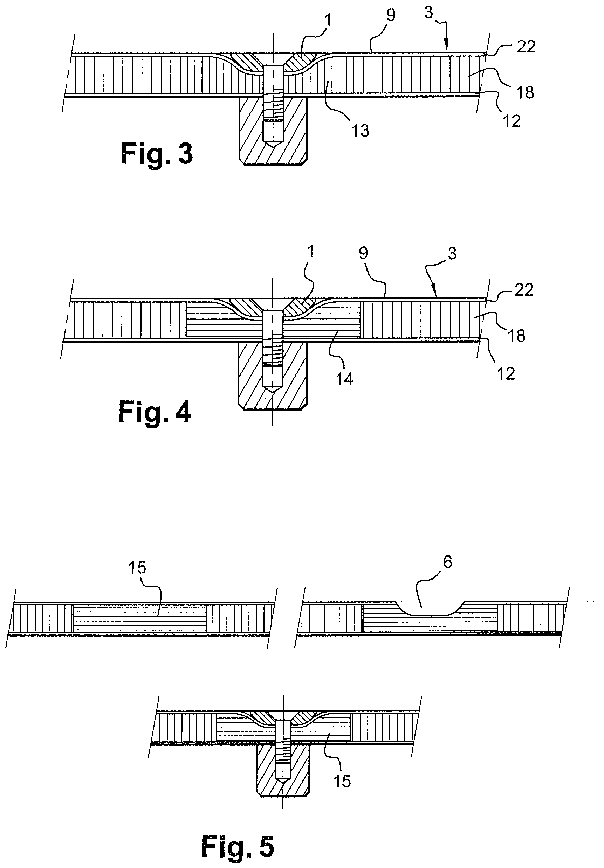

La figure 3 montre un autre exemple de pièce profilée qui est une bande 13 de nid d'abeille à haute densité. Cette bande est usinée au préalable à la forme de la bande conductrice, puis insérée dans l'épaisseur du panneau entre les peaux.

La figure 4 montre encore un autre exemple de pièce profilée qui est une bande monolithique 14 dont le profil creux est obtenu par un drapage à la forme de la bande par empilement successifs de couches de fibres préimprégnés.

La figure 5 montre un exemple de pièce profilée qui est une bande monolithique, mais diffère par rapport à l'exemple de la figure 4 en ce que le profil creux est obtenu par un usinage d'une pièce monolithique pleine 15 après la polymérisation du panneau 3.

La figure 6 montre un dernier exemple de pièce profilée qui est une bande monolithique 16 drapée au contour de la bande au moyen d'une empreinte mâle dans le moule de la bande.

Quel que soit le type de pièces profilées, les moyens de fixation de la bande au panneau ne sont pas modifiés par rapport à ceux qui sont présentés sur la figure 2.

Dans un autre mode de réalisation du système parafoudre tel qu'illustré sur la figure 7, il ne comporte pas de pièce composite profilée. Le logement est formé directement par une rainure 17 située à la surface externe 9 du panneau. Cette rainure est obtenue par un drapage des plis de la structure composite au moyen d'une empreinte maie. Généralement, afin de ne pas entraîner une modification profonde de la structure du panneau, cette rainure est de faible profondeur dans laquelle est reçue une bande parafoudre de faible épaisseur. Par conséquent, pour garder la section efficace pour l'écoulement des courants, ceci entraîne une augmentation de la largeur. Pour garantir la fixation d'une telle bande conductrice, elle est collée au préalable sur la surface externe 9 dans la rainure. La solidarisation de la bande au panneau est ensuite complétée par les fixations mécaniques utilisées déjà pour les autres modes de réalisation.

Avantageusement, le système parafoudre comporte des plis de calage 7 réalisé dans un matériau isolant disposés entre les bords de la bande conductrice et les bords du logement pour adapter le profil de la surface externe de la bande 1 au logement 6 afin d'obtenir un affleurement parfait entre la surface externe de la bande et la surface externe de la structure.

## Revendications

1. Radôme comprenant une Structure composite (3) ayant une surface externe (9) susceptible d'être soumise à un écoulement d'air, ladite structure comprenant un système parafoudre comprenant au moins une pièce réalisée en matériau composite isolant insérée dans l'épaisseur de la structure composite, la pièce formant une partie intégrante de la structure composite et ayant un profil creux et au moins une bande électriquement conductrice (1) positionnée dans le profil creux et des fixations de ladite bande à la structure, ladite bande étant susceptible d'être reliée électriquement par des éléments conducteurs à une masse permettant l'évacuation des courants, ladite bande ayant une forme destinée à venir coopérer avec le profil creux aménagé à ladite surface externe (9) de sorte que la surface externe de la bande (21) est affleurante à ladite surface externe (9) de la structure, et en ce que lesdites fixations (8) comportent une partie supérieure (2) affleurante à la surface externe (21) de la bande.

2. Radôme selon la revendication 1, **caractérisé en ce que** ladite surface externe (9) de la structure composite avec laquelle la surface supérieure des fixations est affleurante est non métallique.

3. Radôme selon la revendication 1 ou 2, **caractérisé en ce que** les fixations de ladite bande électriquement conductrice (1) sont disposées sous forme d'une bande.

4. Radôme selon la revendication 3, **caractérisé en ce que** les fixations sont alignées en étant régulièrement espacées ou non.

5. Radôme selon la revendication 1, **caractérisé en ce que** ladite pièce est une bande de mousse à haute densité semi-rigide (11).

6. Radôme selon la revendication 1, **caractérisé en ce que** ladite pièce est une bande de nid d'abeille à haute densité (13).

## Patentansprüche

1. Radom, umfassend eine Verbundstruktur (3) mit einer Außenfläche (9), die mit einem Luftstrom beaufschlagt werden kann, wobei die Struktur ein Blitzschutzsystem umfasst, das mindestens ein Teil umfasst, das aus einem isolierenden Verbundwerkstoff hergestellt ist und in die Dicke der Verbundstruktur eingeführt ist, wobei das Teil einen integrierten Teil der Verbundstruktur bildet und ein Hohlprofil und mindestens eine in dem Hohlprofil positionierte elektrisch leitende Leiste (1) und Befestigungen für die Leiste an der Struktur aufweist, wobei die Leiste durch leitende Elemente mit einer Masse elektrisch verbunden werden kann, die das Ableiten der Ströme gestattet, wobei die Leiste eine Form aufweist, die mit dem an der Außenfläche (9) ausgebildeten Hohlprofil so zusammenwirken soll, dass die Außenfläche der Leiste (21) mit der Außenfläche (9) der Struktur bündig ist, und dass die Befestigungen (8) einen oberen Teil (2) aufweisen, der mit der Außenfläche (21) der Leiste bündig ist.

2. Radom nach Anspruch 1, **dadurch gekennzeichnet, dass** die Außenfläche (9) der Verbundstruktur, mit der die obere Fläche der Befestigungen bündig ist, nichtmetallisch ist.

3. Radom nach Anspruch 1 oder 2, **dadurch gekennzeichnet, dass** die Befestigungen der elektrisch leitenden Leiste (1) in Form einer Leiste angeordnet sind.

4. Radom nach Anspruch 3, **dadurch gekennzeichnet, dass** die Befestigungen unter gegebenenfalls gleichmäßiger Beabstandung ausgerichtet sind.

5. Radom nach Anspruch 1, **dadurch gekennzeichnet, dass** das Teil eine Leiste (11) aus einem hochdichten Halbhartschaumstoff ist.

6. Radom nach Anspruch 1, **dadurch gekennzeichnet, dass** das Teil eine Leiste (13) aus einem hochdichten Wabenkörper ist.

## Claims

1. Radome comprising a composite structure (3) having an external surface (9) capable of being subjected to an airflow, said structure comprising a lightning-arresting system comprising at least one part that is made of an insulating composite and that is inserted into the thickness of the composite structure, the part forming an integral portion of the composite structure and having a recessed profile and at least one electrically conductive strip (1) positioned in the recessed profile and fasteners fastening said strip to the structure, said strip being capable of being electrically connected, by conductive elements, to a ground allowing the evacuation of currents, said strip having a shape intended to interact with the recessed profile produced in said external surface (9) so that the external surface of the strip (21) is flush with said external surface (9) of the structure, and in that said fasteners (8) include an upper portion (2) that is flush with the external surface (21) of the strip.

2. Radome according to Claim 1, **characterized in that** said external surface (9) of the composite structure with which the upper surface of the fasteners is flush is a non-metal surface.

3. Radome according to Claim 1 or 2, **characterized in that** the fasteners of said electrically conductive strip (1) are arranged in the form of a strip.

4. Radome according to Claim 3, **characterized in that** the fasteners are aligned and optionally regularly spaced.

5. Radome according to Claim 1, **characterized in that** said part is a semi-rigid high-density-foam strip (11).

6. Radome according to Claim 1, **characterized in that** said part is a high-density honeycomb strip (13).
